# FASCICULE DE BREVET EUROPEEN

(11) **EP 4 100 668 B1**
(45) Date de publication et mention de la délivrance du brevet: **15.05.2024**
(21) Numéro de dépôt: 21702499.1
(22) Date de dépôt: 02.02.2021
(51) Int. Cl.: F16J 3/06, F15B 15/10

(54) **ELÉMENT TUBULAIRE EXPANSIBLE POUR VÉRIN GONFLABLE**
AUSDEHNBARES ROHRFÖRMIGES ELEMENT FÜR EINEN AUFBLASBAREN ZYLINDER
EXPANDABLE TUBULAR ELEMENT FOR INFLATABLE CYLINDER

(30) Priorité: 06.02.2020 FR 2001159
(43) Date de publication de la demande: 14.12.2022
(73) Titulaire: Eclore Actuators, 44300 Nantes (FR)
(72) Inventeur: GAUTIER-LE BOULCH, Pierre, 44000 Nantes (FR)
(74) Mandataire: LLR
(86) Numéro de dépôt international: PCT/EP2021/052409
(87) Numéro de publication internationale: WO 2021/156240

(56) Documents cités:
- DE-A1-102010 007 740
- JP-A- 2012 092 956
- US-A- 5 181 452

## Description

L'invention concerne le domaine des vérins gonflables.

Ces vérins gonflables sont généralement utilisés pour un dispositif comme un amortisseur ou un actionneur. Par exemple, le document US 5,181,452 A divulgue un actionneur à soufflets.

De tels vérins gonflables sont généralement gonflés à l'air, mais peuvent être également utilisables avec de l'eau, de l'huile, du glycol, ou plus généralement un fluide. Ces vérins gonflables, également appelés coussins gonflables, sont généralement composés d'un élément tubulaire expansible en caoutchouc ou en matériau plastique, éventuellement surmonté d'un embout ou disposé entre deux embouts. L'élément tubulaire comporte généralement une paroi périphérique sous forme de soufflet cylindrique en accordéon, et est par exemple obtenu par moulage par soufflage d'une paraison d'un matériau élastomère thermoplastique. Le ou les embouts sont généralement métalliques, et sont engagés avec des éléments mécaniques qui sont configurés pour être entraînés par le vérin gonflable. Pour permettre une bonne compressibilité de l'élément tubulaire et limiter l'encombrement du vérin gonflable, la paroi périphérique de l'élément tubulaire possède une épaisseur variable.

Toutefois, une telle variation d'épaisseur conduit à des difficultés de fabrication et à des zones de résistance moindre à la pression, en particulier lorsque le vérin gonflable est à l'état gonflé au maximum. En effet, en cas de surpression, du fait que la paroi périphérique de l'élément tubulaire possède une épaisseur variable, celui-ci peut se déformer localement de manière importante au-delà de sa forme maximale souhaitée au niveau de la zone d'épaisseur la plus faible, à savoir une section circulaire du soufflet cylindrique. Ainsi, la résistance à la pression d'un tel élément tubulaire pour vérin gonflable est faible en considérant l'épaisseur la plus faible de la paroi périphérique de l'élément tubulaire.

Ainsi, compte-tenu de leur conception, les vérins gonflables actuels ne permettent pas à la fois d'obtenir un encombrement faible et une résistance à la pression optimale.

L'invention a notamment pour but de disposer d'un élément tubulaire expansible pour vérin gonflable, lequel dispose d'un encombrement limité ainsi que d'une résistance à la pression optimale.
les panneaux étant plus rigides que les liaisons, de sorte que deux panneaux adjacents à une liaison peuvent effectuer une rotation autour de l'axe de pivotement matérialisé par cette liaison,
chaque extrémité d'une liaison étant reliée au moins à deux extrémités d'autres liaisons de manière à définir un noeud,
chaque noeud possédant une épaisseur supérieure à l'épaisseur minimale des liaisons adjacentes.

Ainsi, on propose de réaliser l'invention en fournissant un élément tubulaire expansible, dans lequel les noeuds renforcent la structure. En effet, même avec une épaisseur faible des liaisons, l'élément tubulaire expansible subit une déformation radiale limitée du fait de la présence des noeuds. Ainsi, la résistance à la pression de l'élément tubulaire expansible est améliorée. La structure sous forme de panneaux, de liaisons et de noeuds permet une compressibilité maximale de l'élément tubulaire expansible et ainsi un encombrement minimal de l'élément tubulaire expansible à l'état comprimé.

Suivant d'autres caractéristiques optionnelles de l'élément tubulaire expansible, prises seules ou en combinaison :
- Les liaisons sont majoritairement composées de matériau plastique. Par majoritairement, il faut comprendre massiquement majoritaire. Ainsi, la fabrication est facilitée.
- Les panneaux sont de forme polygonale, de préférence de forme triangulaire. Ainsi, la compressibilité et la résistance de l'élément tubulaire expansible sont améliorées.
- Les panneaux présentent une épaisseur sensiblement uniforme. Ainsi, la fabrication est facilitée.
- L'épaisseur des noeuds est sensiblement identique à l'épaisseur des panneaux. Ainsi, l'encombrement de l'élément tubulaire expansible est davantage réduit.
- Au moins une des liaisons présente une constitution identique à au moins une partie des panneaux adjacents à ladite liaison et, au moins par endroits, une épaisseur moindre que les épaisseurs de ces panneaux. Ainsi, la fabrication de l'élément tubulaire expansible est simplifiée, et l'élément tubulaire expansible se comprime aisément.
- Les panneaux et les liaisons possèdent la même composition. Ainsi, la fabrication est facilitée.
- Les panneaux sont majoritairement composés de matériau plastique. Par majoritairement, il faut comprendre massiquement majoritaire. Ainsi, la fabrication est facilitée.
- La paroi périphérique est majoritairement composée de matériau plastique. Par majoritairement, il faut comprendre massiquement majoritaire. Ainsi, la fabrication est facilitée.
- La paroi périphérique est formée par les panneaux et les liaisons.
- La paroi périphérique est composée d'un matériau composite ou multicouche, lequel comporte de préférence un matériau polymère et/ou élastomère, plus préférentiellement du polypropylène et/ou du polyéthylène. Ainsi, la résistance à la pression de l'élément tubulaire expansible est améliorée.
- La paroi périphérique est composée d'un matériau composite ou multicouche, lequel comporte de préférence un matériau métallique. Ainsi, la résistance à la pression de l'élément tubulaire expansible est améliorée.
- La paroi périphérique est composée d'un matériau multicouche et comporte une couche électriquement conductrice, de préférence métallique, plus préférentiellement sous forme d'une encre conductrice et/ou d'un film métallique disposés sur la surface intérieure et/ou extérieure de la paroi périphérique. Ainsi, l'élément tubulaire expansible peut permettre la conduction d'électricité, par exemple pour alimenter des éléments situés en aval de l'élément tubulaire expansible par rapport à une source d'énergie électrique, et/ou pour réaliser une fonction de capteur du fait que la résistance électrique de l'élément tubulaire expansible est modifiée en fonction de son état de déformation.
- La couche électriquement conductrice est la couche la plus interne. Ainsi, la connexion à un dispositif situé au sein de l'élément tubulaire expansible, par exemple une source d'énergie électrique, un transducteur ou une antenne, est simplifiée.
- La couche électriquement conductrice est la plus externe. Ainsi, la connexion à un dispositif situé à l'extérieur de l'élément tubulaire expansible, par exemple une source d'énergie électrique, un transducteur ou une antenne, est simplifiée.
- Au moins une des liaisons est formée par un film adhésif reliant deux panneaux adjacents. Ainsi, la fabrication de l'élément tubulaire est simplifiée.

L'invention a également pour objet un vérin gonflable par un fluide, comprenant un élément tubulaire expansible du type susmentionné et un embout fixé à une des extrémités de l'élément tubulaire expansible.

Suivant d'autres caractéristiques optionnelles du vérin gonflable, prises seules ou en combinaison :
- L'embout comporte un moyen d'alimentation et/ou d'évacuation de fluide, l'élément tubulaire expansible étant configuré pour passer d'un mode rétracté dans lequel il présente un premier volume intérieur à un mode dilaté dans lequel il présente un second volume intérieur et une forme sensiblement cylindrique, le second volume intérieur étant supérieur au premier volume intérieur, de préférence d'au moins un facteur 10, plus préférentiellement d'au moins un facteur 100. Ainsi, en fournissant un vérin gonflable doté d'un élément tubulaire expansible dans lequel l'embout comporte un moyen d'alimentation et/ou d'évacuation de fluide, la structure de l'élément tubulaire expansible sous forme de panneaux, de liaisons et de noeuds permet une compressibilité maximale de l'élément tubulaire expansible et ainsi un encombrement minimal de l'élément tubulaire expansible lorsque le vérin gonflable se trouve à l'état rétracté, tout en garantissant une résistance à la pression importante lorsque le vérin gonflable se trouve à l'état dilaté.
- L'élément tubulaire expansible présente une forme sensiblement cylindrique coudée dans le mode dilaté. Ainsi, un actionnement peut être obtenu dans toute direction spatiale souhaitée.
- La pression de fluide au sein de l'élément tubulaire expansible est comprise entre 0 et 1 bar lorsque l'élément tubulaire expansible est dans un mode rétracté.
- La pression de fluide au sein de l'élément tubulaire expansible est comprise entre 1 et 12 bar lorsque l'élément tubulaire expansible est dans un mode dilaté.
- Le vérin gonflable comprend en outre des moyens de guidage permettant de guider le déplacement de l'élément tubulaire expansible entre son mode rétracté et son mode dilaté et inversement, de préférence une tige télescopique de guidage.
- Les moyens de guidage sont disposés dans l'espace interne délimité par la paroi périphérique de l'élément tubulaire expansible.
- Les moyens de guidage sont disposés à l'extérieur de l'espace interne délimité par la paroi périphérique de l'élément tubulaire expansible, et sont de préférence régulièrement répartis autour de la périphérie de l'élément tubulaire expansible.
- Le vérin gonflable comporte deux embouts, chaque embout étant fixé à une des extrémités de l'élément tubulaire expansible.
- Le vérin gonflable comporte des moyens de limitation de course, par exemple composés d'une gaine, de préférence textile, disposée à l'extérieur de la paroi périphérique de l'élément tubulaire expansible.
- Le vérin gonflable comporte un moyen de transfert d'énergie, de préférence un tuyau de transfert de fluide et/ou un câble électrique, disposé dans l'espace intérieur de l'élément tubulaire expansible.
- Le vérin gonflable comporte au moins deux éléments tubulaires expansibles.
- Les éléments tubulaires expansibles sont disposés en série.
- Les éléments tubulaires expansibles adjacents disposés en série sont reliés l'un à l'autre via au moins un embout.
- Le vérin gonflable comporte au moins trois éléments tubulaires expansibles.
- Les éléments tubulaires expansibles sont disposés en parallèle.
- Les éléments tubulaires expansibles disposés en parallèles comportent chacun un embout, lesquels supportent conjointement une platine.
- La paroi périphérique est collée sur l'embout. Ainsi, la fixation de l'élément tubulaire expansible et de l'embout est réalisée de manière particulièrement simple.
- L'embout comporte un flasque et un élément de fixation, la paroi périphérique étant maintenue dans l'embout par serrage entre le flasque et l'élément de fixation. Ainsi, la fixation de l'élément tubulaire expansible et de l'embout est réalisée de manière particulièrement simple.

L'invention a enfin pour objet un procédé de fabrication d'un élément tubulaire expansible du type susmentionné, lequel comporte les étapes suivantes :
- fabrication d'un tube majoritairement composé de matériau plastique,
- réalisation d'une pluralité de motifs sur le tube par des moyens de gravage et/ou de marquage,
- déformation des motifs, de manière à ce que les motifs à l'état déformé forment les liaisons, l'étape de déformation des motifs étant réalisée par dépressurisation de l'intérieur du tube, de préférence à une pression comprise entre 0 et 0,5 bar, et/ou par appui mécanique simultané sur les motifs disposés sur une même section transversale du tube.

Ainsi, la fabrication d'un élément tubulaire expansible est réalisée de manière simple et économique

Suivant d'autres caractéristiques optionnelles du procédé de fabrication, prises seules ou en combinaison :
- Les motifs sont par exemple des motifs cylindriques, du type connu sous le nom de motif Yoshimura, Waterbomb, Kresling ou Chicken Wire, préférentiellement de type Kresling.
- L'étape de déformation des motifs est une étape de pliage.
- L'étape de fabrication d'un tube majoritairement composé de matériau plastique est une étape de fabrication d'un tube uniquement constitué de matériau plastique.
- L'étape de fabrication d'un tube majoritairement composé de matériau plastique est réalisée par thermoformage, par injection-soufflage, par moulage ou par rotomoulage.
- Les moyens de gravage comprennent un laser.
- Les moyens de marquage comprennent une molette.
- L'étape de réalisation d'une pluralité de motifs sur le tube par un moyen de gravage et/ou de marquage est réalisée par gravage laser puis par marquage par molette.
- Le procédé comprend, de préférence après l'étape de déformation des motifs, une étape de cuisson par recuit de l'élément tubulaire expansible ainsi obtenu, de manière à ce que son mode au repos soit le mode rétracté.

### Brève description des figures

L'invention sera mieux comprise à la lecture de la description qui va suivre donnée uniquement à titre d'exemple et faite en se référant aux dessins annexés dans lesquels :
[Fig.1] la [Fig.1] est une vue schématique de face d'un vérin gonflable selon un premier mode de réalisation, à l'état dilaté ;
[Fig.2] la [Fig.2] est une vue schématique de face d'un vérin gonflable doté d'un élément tubulaire expansible selon le premier mode de réalisation, à l'état rétracté ;
[Fig.3] la [Fig.3] est une vue schématique en perspective d'un embout selon une première variante ;
[Fig.4] la [Fig.4] est une vue schématique en perspective d'un vérin gonflable selon un deuxième mode de réalisation, à l'état dilaté ;
[Fig.5] la [Fig.5] est une vue schématique en perspective d'un vérin gonflable selon un troisième mode de réalisation, à l'état dilaté ;
[Fig.6] la [Fig.6] est une vue schématique de face d'un vérin gonflable selon un quatrième mode de réalisation, à l'état dilaté ;
[Fig.7] la [Fig.7] est une vue schématique en perspective d'un vérin gonflable selon un cinquième mode de réalisation, à l'état dilaté, lequel est doté d'embouts selon une seconde variante ;
[Fig.8] la [Fig.8] est une vue schématique partielle de face d'un vérin gonflable selon une variante du premier mode de réalisation, à l'état dilaté ;
[Fig.9] la [Fig.9] est une vue schématique de face d'un vérin gonflable selon une variante du premier mode de réalisation, à l'état dilaté ;
[Fig.10] la [Fig.10] est une vue schématique partielle de face d'un vérin gonflable selon une variante du premier mode de réalisation, à l'état dilaté ;
[Fig.11] la [Fig.11] est une vue schématique partielle de face d'un vérin gonflable selon une variante du premier mode de réalisation, à l'état dilaté.

### Description détaillée

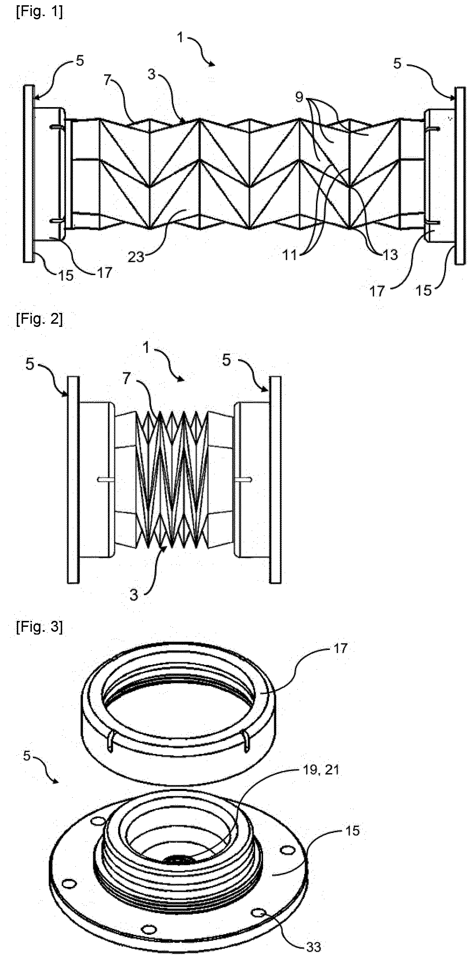

On a représenté sur la [Fig.1] un vérin gonflable 1 selon un premier mode de réalisation. Le vérin gonflable 1 est gonflable par un fluide, par exemple de l'air ou de l'eau. Le vérin gonflable 1 comprend un élément tubulaire expansible 3 et un embout 5 selon une première variante, fixé à une des extrémités de l'élément tubulaire expansible 3. Dans l'exemple représenté sur la [Fig.1], le vérin gonflable 1 comporte deux embouts 5, chaque embout 5 étant fixé à une des extrémités de l'élément tubulaire expansible 3.

L'élément tubulaire expansible 3 comporte une paroi périphérique 7.

La paroi périphérique 7 est étanche au fluide. La paroi périphérique 7 est formée par une pluralité de panneaux 9 reliés deux-à-deux par des liaisons 11 sensiblement rectilignes matérialisant chacune un axe de pivotement.

Les panneaux 9 sont plus rigides que les liaisons 11. Ainsi, deux panneaux 9 adjacents à une liaison 11 peuvent effectuer une rotation autour de l'axe de pivotement matérialisé par cette liaison 11. Dans l'exemple représenté sur la [Fig.1], les panneaux 9 sont de forme triangulaire. Plus généralement, les panneaux 9 peuvent être de forme polygonale. Dans l'exemple représenté sur la [Fig.1], les panneaux 9 présentent une épaisseur sensiblement uniforme.

Chaque liaison 11 comporte deux extrémités. Chaque extrémité d'une liaison 11 est reliée au moins à deux extrémités d'autres liaisons 11 de manière à définir un noeud 13. Dans l'exemple représenté sur la [Fig.1], les liaisons 11 présentent une constitution identique aux panneaux 9 adjacents à ladite liaison 11 et, au moins par endroits, une épaisseur moindre que les épaisseurs de ces panneaux 9.

Chaque noeud 13 possède une épaisseur supérieure à l'épaisseur minimale des liaisons 11 adjacentes. Dans l'exemple représenté sur la [Fig.1], l'épaisseur des noeuds est en outre sensiblement identique à l'épaisseur des panneaux 9.

Comme représenté sur les figures 1 et 3, chaque embout 5 comporte un flasque 15 et un élément de fixation 17. Ainsi, la paroi périphérique 7 est maintenue dans l'embout 5 par serrage entre le flasque 15 et l'élément de fixation 17. L'élément de fixation 17 et le flasque 15 comportent chacun un filetage, de telle sorte que l'élément de fixation 17 est rapporté sur le flasque 15 par vissage. Dans cet exemple, le flasque 15 présente une forme sensiblement cylindrique.

Au moins un embout 5, par exemple chaque embout 5, comporte un moyen d'alimentation et/ou d'évacuation de fluide 19, par exemple un trou central 21, lequel débouche dans l'espace interne délimité par la paroi périphérique 7 de l'élément tubulaire expansible 3. Dans l'exemple représenté sur la [Fig.1], le trou central 21 est fileté afin de permettre la connexion à un élément d'alimentation et/ou d'évacuation de fluide, comme par exemple un raccord d'extrémité de tuyau souple.

L'élément tubulaire expansible 3 est ainsi configuré pour passer d'un mode rétracté dans lequel il présente un premier volume intérieur, comme représenté sur la [Fig.2], à un mode dilaté dans lequel il présente un second volume intérieur et une forme sensiblement cylindrique, comme représenté sur la [Fig.1], et inversement. Le second volume intérieur est supérieur au premier volume intérieur, de préférence d'au moins un facteur 10, plus préférentiellement d'au moins un facteur 100.

La pression de fluide au sein de l'élément tubulaire expansible 3 est de préférence comprise entre 0 et 1 bar lorsque l'élément tubulaire expansible est dans un mode rétracté. La pression de fluide au sein de l'élément tubulaire expansible 3 est de préférence comprise entre 1 et 12 bar lorsque l'élément tubulaire expansible est dans un mode dilaté.

La paroi périphérique 7 est majoritairement composée de matériau plastique. Ainsi, la paroi périphérique 7 est formée par les panneaux 9 et les liaisons 11, dans laquelle les liaisons 11 sont majoritairement composées de matériau plastique, et les panneaux 9 sont majoritairement composés de matériau plastique. Dans l'exemple représenté sur la [Fig.1], la paroi périphérique 7 est composée d'un matériau multicouche, lequel comporte de préférence un matériau polymère et/ou élastomère, plus préférentiellement du polypropylène et/ou du polyéthylène. Plus précisément, la paroi périphérique 7 comporte une couche principale composée majoritairement ou en totalité d'un matériau plastique, de préférence un matériau polymère et/ou élastomère, plus préférentiellement du polypropylène et/ou du polyéthylène. La paroi périphérique 7 comporte également une couche électriquement conductrice 23, de préférence métallique, plus préférentiellement sous forme d'une encre conductrice et/ou d'un film métallique disposés sur la surface intérieure et/ou extérieure de la paroi périphérique 7. La couche électriquement conductrice est la couche la plus interne, et/ou comme représenté sur la [Fig.1], la couche électriquement conductrice 23 est la plus externe.

Alternativement ou de manière complémentaire, la paroi périphérique 7 ou sa couche principale peut être composée d'un matériau composite. Ainsi, la paroi périphérique 7 ou sa couche principale peut être constituée d'un matériau choisi dans le groupe comprenant de la résine thermoplastique, de préférence polypropylène et/ou polyéthylène, de préférence renforcée par des fibres de carbone, des fibres de verre, des fibres naturelles ou du Kevlar (marque déposée).

Chaque embout 5 est par exemple en matériau plastique, composite ou métallique. Dans le cas où l'embout 5 est en matériau composite, celui-ci peut être constitué de résine thermodurcissable, de préférence résine époxy, polyuréthane ou polyester, de préférence renforcée par des fibres de carbone, des fibres de verre, des fibres naturelles ou du Kevlar (marque déposée).

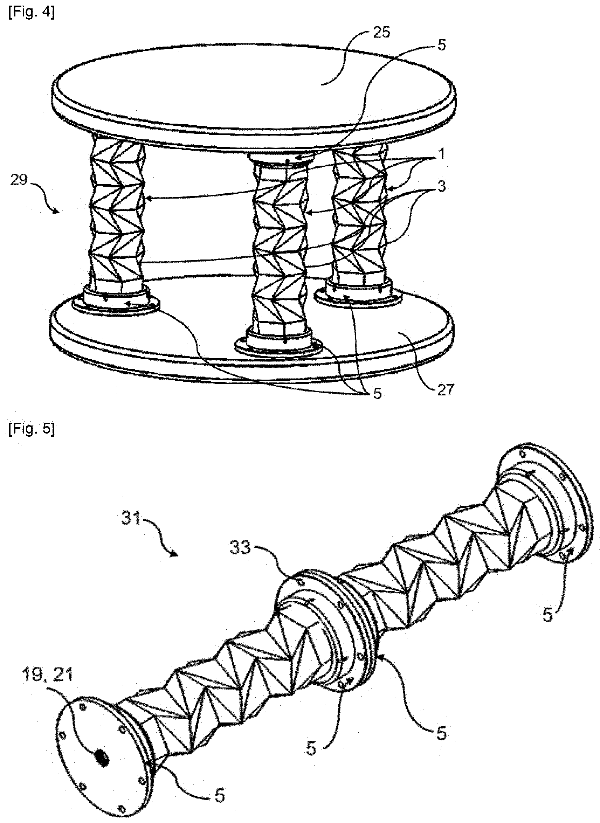

Dans un deuxième mode de réalisation représenté sur la [Fig.4], un vérin gonflable 25 comporte trois éléments tubulaires expansibles 3. Les éléments tubulaires expansibles 3 sont disposés en parallèle et comportent un embout 5 à chacune de leurs extrémités, lesquels supportent conjointement une platine 25, 27. Ainsi, un vérin gonflable 25 selon ce deuxième mode de réalisation comprend trois vérins gonflables 1 selon le premier mode de réalisation exposé ci-avant, lesquels sont disposés parallèlement entre deux platines 25, 27.

Il est bien entendu possible de réaliser le vérin gonflable 25 avec plus de trois éléments tubulaires expansibles 3.

Dans un troisième mode de réalisation représenté sur la [Fig.5], un vérin gonflable 31 comporte deux éléments tubulaires expansibles 3. Les éléments tubulaires expansibles 3 sont disposés en série et comportent un embout 5 à chacune de leurs extrémités. Ainsi, les deux éléments tubulaires expansibles 3 sont reliés l'un à l'autre via deux de leurs embouts 5, lesquels sont fixés en regard l'un de l'autre, comme représenté sur la [Fig.5], par exemple au moyen de boulons de fixation engagés dans des trous de fixation 33 des embouts 5. Ainsi, un vérin gonflable 31 selon ce troisième mode de réalisation comprend deux vérins gonflables 1 selon le premier mode de réalisation exposé ci-avant, lesquels sont disposés en série.

Il est bien entendu possible de réaliser le vérin gonflable 31 avec plus de deux éléments tubulaires expansibles 3. Dans ce cas, les éléments tubulaires expansibles 3 adjacents sont reliés l'un à l'autre via au moins un embout 5, de préférence via deux embouts 5.

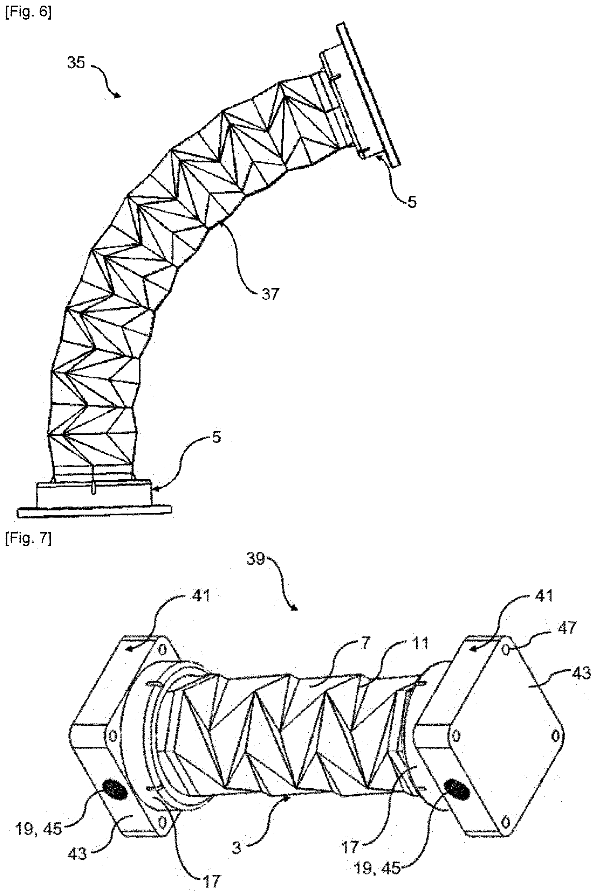

Un quatrième mode de réalisation représenté sur la [Fig.6] se distingue du premier mode de réalisation représenté sur la [Fig.1] en ce que le vérin gonflable 35 comporte un élément tubulaire expansible 37 qui présente une forme sensiblement cylindrique coudée dans le mode dilaté. A l'exception de cette forme particulière de l'élément tubulaire expansible 37, le vérin gonflable 35 est similaire au vérin gonflable 1, et comporte notamment un embout 5 à chacune des extrémités de l'élément tubulaire expansible 37. Ainsi, à l'exception de cette forme particulière, l'élément tubulaire expansible 37 est similaire à l'élément tubulaire expansible 3 exposé ci-avant. En outre, dans un mode rétracté, le vérin gonflable 35 prend une forme similaire à celle représentée sur la [Fig.2] pour le vérin gonflable 1.

Un cinquième mode de réalisation représenté sur la [Fig.6] se distingue du premier mode de réalisation représenté sur la [Fig.1] en ce que le vérin gonflable 39 comporte des embouts 41 selon une seconde variante, disposés en remplacement des embouts 5 exposés ci-avant. Chaque embout 41 comporte un flasque 43, dans cet exemple de forme sensiblement parallélépipédique rectangle, et un élément de fixation 17. Ainsi, la paroi périphérique 7 de l'élément expansible tubulaire 3 est maintenue dans l'embout 5 par serrage entre le flasque 43 et l'élément de fixation 17. L'élément de fixation 17 et le flasque 43 comportent chacun un filetage 15, de telle sorte que l'élément de fixation 17 est rapporté sur le flasque 43 par vissage.

Au moins un embout 41, par exemple chaque embout 41, comporte un moyen d'alimentation et/ou d'évacuation de fluide 19, par exemple un trou latéral 45, lequel débouche dans l'espace interne délimité par la paroi périphérique 7 de l'élément tubulaire expansible 3. Dans l'exemple représenté sur la [Fig.7], le trou latéral 45 est fileté afin de permettre la connexion à un élément d'alimentation et/ou d'évacuation de fluide, comme par exemple un raccord d'extrémité de tuyau souple. Chaque embout 41 comporte en outre des trous de fixation 47, lesquels exercent des fonctions similaires aux trous de fixation 33 exposés ci-avant. Chaque embout 41 est par exemple réalisé dans un matériau similaire à celui exposé ci-avant pour un embout 5.

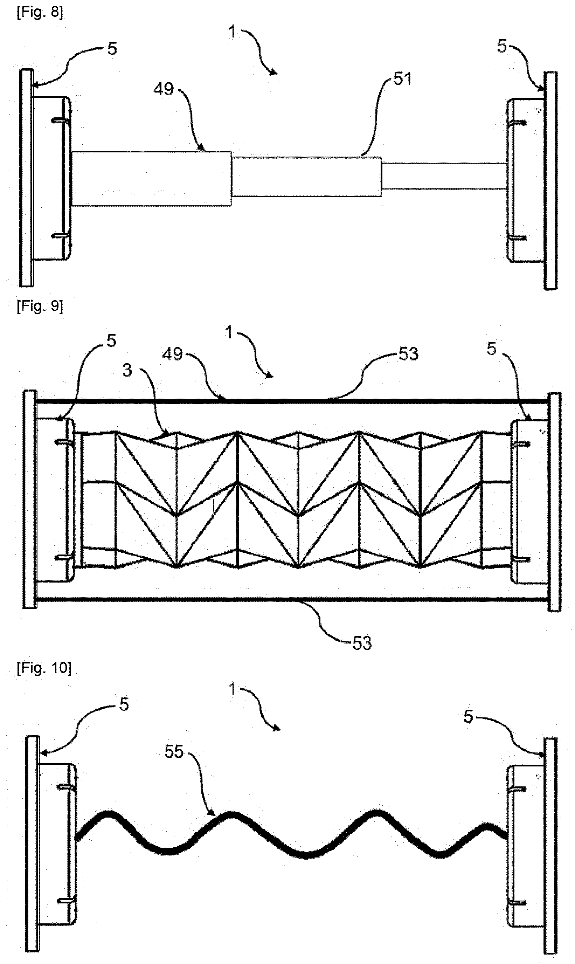

Différentes variantes du premier mode de réalisation sont représentées sur les figures 8 à 10, l'élément tubulaire expansible 3 étant omis sur les figures 8 et 10 pour afin de rendre visible l'espace interne délimité par la paroi périphérique 7 de l'élément tubulaire expansible 3.

Dans une variante représentée sur la [Fig.8], le vérin gonflable 1 comporte des moyens de guidage 49 permettant de guider le déplacement de l'élément tubulaire expansible 3 entre son mode rétracté et son mode dilaté et inversement. Les moyens de guidage 49 sont disposés dans l'espace interne délimité par la paroi périphérique 7 de l'élément tubulaire expansible 3. Les moyens de guidage 49 comportent une tige télescopique de guidage 51, par exemple métallique.

Dans une variante représentée sur la [Fig.9], le vérin gonflable 1 comporte des moyens de guidage 49 permettant de guider le déplacement de l'élément tubulaire expansible 3 entre son mode rétracté et son mode dilaté et inversement. Les moyens de guidage 49 sont disposés à l'extérieur de l'espace interne délimité par la paroi périphérique 7 de l'élément tubulaire expansible 3, et sont de préférence régulièrement répartis autour de la périphérie de l'élément tubulaire expansible 3. Les moyens de guidage 49 comportent des tiges de guidage 53, par exemple métalliques. Les tiges de guidage 53 sont par exemple fixées dans les trous de fixation 33 sur un des embouts 5, et coulissent dans les trous de fixation 33 de l'autre embout 5 afin de réaliser un guidage linéaire. Au moins une tige de guidage 53 peut comporter une butée d'extrémité afin de remplir une fonction de limiteur de course pour le vérin gonflable 1 en empêchant le coulissement au-delà d'une distance souhaitée pour l'obtention du mode dilaté de l'élément tubulaire expansible 3, la butée d'extrémité contactant alors l'embout 5 coulissant par rapport à la tige de guidage.

Dans une variante représentée sur la [Fig.10], le vérin gonflable 1 comporte un moyen de transfert d'énergie 55, de préférence un tuyau de transfert de fluide et/ou un câble électrique, disposé dans l'espace intérieur de l'élément tubulaire expansible 3. Le moyen de transfert d'énergie 55 permet de transférer de l'énergie depuis un embout 5 vers l'autre embout 5, et permet par exemple de transférer de l'énergie à un autre vérin gonflable relié au vérin gonflable 1 et/ou à un capteur et/ou à un élément d'actionnement comme une vanne ou un distributeur. Le moyen de transfert d'énergie 55 peut également remplir une fonction de limiteur de course pour le vérin gonflable 1, par exemple lorsque le moyen de transfert d'énergie 55 est sous forme d'un câble. Le moyen de transfert d'énergie 55 peut présenter une forme en serpentin, comme illustré sur la [Fig.10].

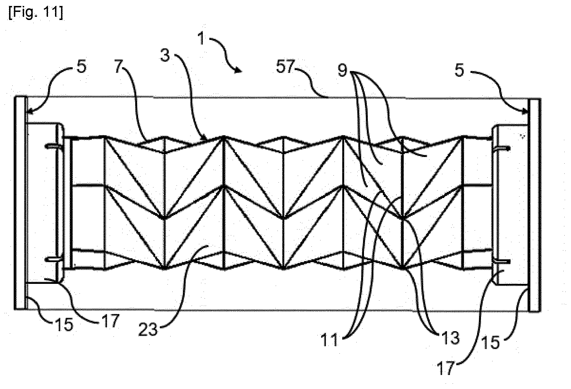

Dans une variante représentée sur la [Fig.11], le vérin gonflable 1 comporte des moyens de limitation de course, par exemple composés d'une gaine 57, de préférence textile, disposée à l'extérieur de la paroi périphérique 7 de l'élément tubulaire expansible 3. Ces moyens de limitation de course permettent de limiter le déplacement de l'élément tubulaire expansible 3 entre son mode rétracté et son mode dilaté. Ainsi, ils empêchent le coulissement au-delà d'une distance souhaitée pour l'obtention du mode dilaté de l'élément tubulaire expansible 3, sans gêner le déplacement de l'élément tubulaire expansible 3 entre son mode dilaté et son mode rétracté. La gaine 57 est fixée à ses extrémités aux embouts 5, par exemple au moyen de liens venant resserrer le diamètre de la gaine 57 à ses extrémités. Ainsi, le montage de la gaine 57 sur le vérin gonflable 1 est particulièrement simple : La gaine 57 est ainsi passée à travers les embouts 5, puis les liens sont resserrés afin de maintenir la gaine 57 sur les embouts 5. Dans l'exemple représenté sur la [Fig.11], l'élément tubulaire expansible 3 est dans un mode dilaté, la gaine 57 est ainsi tendue entre les embouts 5 afin de réaliser sa fonction de limiteur de course.

Un exemple de procédé de fabrication d'un élément tubulaire expansible va à présent être décrit.

Un tel procédé comporte les étapes suivantes :
- fabrication d'un tube majoritairement composé de matériau plastique,
- réalisation d'une pluralité de motifs sur le tube par des moyens de gravage et/ou de marquage,
- déformation des motifs, de manière à ce que les motifs à l'état déformé forment les liaisons, l'étape de déformation des motifs étant réalisée par dépressurisation de l'intérieur du tube, de préférence à une pression comprise entre 0 et 0,9 bar, et/ou par appui mécanique simultané sur les motifs disposés sur une même section transversale du tube.

Les motifs sont par exemple des motifs cylindriques, du type connu sous le nom de motif Yoshimura, Waterbomb, Kresling ou Chicken Wire, préférentiellement de type Kresling.

L'étape de déformation des motifs est par exemple une étape de pliage. L'étape de fabrication d'un tube majoritairement composé de matériau plastique est par exemple une étape de fabrication d'un tube uniquement constitué de matériau plastique.

L'étape de fabrication d'un tube majoritairement composé de matériau plastique est réalisée par thermoformage, par injection-soufflage, par moulage ou par rotomoulage. Les moyens de gravage comprennent un laser. Les moyens de marquage comprennent une molette. L'étape de réalisation d'une pluralité de motifs sur le tube par un moyen de gravage et/ou de marquage est réalisée par gravage laser puis par marquage par molette.

Si le mode au repos souhaité pour le vérin gonflable est le mode rétracté, le procédé comprend, de préférence après l'étape de déformation des motifs, une étape de cuisson par recuit de l'élément tubulaire expansible ainsi obtenu, de manière à ce que son mode au repos soit le mode rétracté.

Afin de fabriquer un vérin gonflable, un élément tubulaire expansible fabriqué tel que précédemment est rapporté sur un embout. Plus précisément, une ou chaque extrémité de l'élément tubulaire expansible est disposée sur un flasque de l'embout et serrée sur celui-ci au moyen d'un élément de fixation de l'embout. Alternativement, un élément tubulaire expansible peut être collé sur un embout.

Un exemple de fonctionnement d'un vérin gonflable selon le premier mode de réalisation va à présent être décrit.

Comme illustré sur la [Fig.1], l'élément tubulaire expansible du vérin gonflable 1 se trouve dans un mode dilaté. La pression de fluide au sein de l'élément tubulaire expansible 3 est alors comprise entre 1 et 12 bar. Du fluide est évacué hors de l'élément tubulaire expansible 3 via le moyen d'alimentation et/ou d'évacuation de fluide 19 disposé sur un embout 5. Par conséquent, la pression du fluide dans l'élément tubulaire expansible 3 diminue, ce qui provoque la rétractation de l'élément tubulaire expansible 3 jusqu'à ce que l'élément tubulaire expansible 3 soit dans un mode rétracté, représenté sur la [Fig.2]. Dans le mode rétracté, la pression de fluide au sein de l'élément tubulaire expansible 3 est alors comprise entre 0 et 1 bar.

Inversement, lorsque l'élément tubulaire expansible 3 se trouve dans un mode rétracté et que l'on souhaite faire passer l'élément tubulaire expansible 3 dans un mode dilaté, du fluide est introduit dans l'élément tubulaire expansible 3 via le moyen d'alimentation et/ou d'évacuation de fluide 19 disposé sur un embout 5. Par conséquent, la pression du fluide dans l'élément tubulaire expansible 3 augmente, ce qui provoque la dilatation de l'élément tubulaire expansible 3 jusqu'à ce que l'élément tubulaire expansible 3 soit dans un mode dilaté, représenté sur la [Fig.1].

L'invention n'est pas limitée aux modes de réalisation présentés et d'autres modes de réalisation apparaîtront clairement à l'homme du métier.

Alternativement ou de manière complémentaire au maintien de la paroi périphérique 7 dans l'embout 5, 41 par serrage comme exposé ci-avant, l'embout 5, 41 et la paroi périphérique 7 peuvent également être solidarisés par collage. L'embout 5, 41 peut également comporter des raccords fluidiques et/ou d'énergie électrique

En outre, au moins une des liaisons 11 peut être formée par un film adhésif reliant deux panneaux 9 adjacents.

Enfin, au moins un des panneaux 9 peut être réalisé à base d'un insert possédant une rigidité supérieure à celle des liaisons 11, l'insert étant par exemple métallique, l'insert étant encapsulé dans un matériau plastique pour former le panneau 9. Cela permet d'augmenter la rigidité du panneau 9 ainsi réalisé.

### Liste de références

- 1 :: vérin gonflable
- 3 :: élément tubulaire expansible
- 5 :: embout
- 7 :: paroi périphérique

- 9 :: panneau
- 11 :: liaison
- 13 :: noeud
- 15 :: flasque
- 17 :: élément de fixation
- 19 :: moyen d'alimentation et/ou d'évacuation de fluide
- 21 :: trou central
- 23 :: couche électriquement conductrice
- 25 :: platine
- 27 :: platine
- 29 :: vérin gonflable
- 31 :: vérin gonflable
- 33 :: trou de fixation
- 35 :: vérin gonflable
- 37 :: élément tubulaire expansible
- 39 :: vérin gonflable
- 41 :: embout
- 43 :: flasque
- 45 :: trou latéral
- 47 :: trou de fixation
- 49 :: moyens de guidage
- 51 :: tige télescopique de guidage
- 53 :: tige de guidage
- 55 :: moyen de transfert d'énergie
- 57 :: gaine

## Revendications

1. Elément tubulaire expansible (3, 37) pour vérin gonflable par un fluide, comportant une paroi périphérique (7), laquelle est étanche au fluide et est formée par une pluralité de panneaux (9) reliés deux-à-deux par des liaisons (11) sensiblement rectilignes matérialisant chacune un axe de pivotement,
les liaisons (11) étant majoritairement composées de matériau plastique,
les panneaux (9) étant plus rigides que les liaisons (11), de sorte que deux panneaux (9) adjacents à une liaison (11) peuvent effectuer une rotation autour de l'axe de pivotement matérialisé par cette liaison (11),
chaque extrémité d'une liaison (11) étant reliée au moins à deux extrémités d'autres liaisons (11) de manière à définir un noeud (13),
**caractérisé en ce que** chaque noeud (13) possède une épaisseur supérieure à l'épaisseur minimale des liaisons (11) adjacentes.

2. Elément tubulaire expansible (3, 37) selon la revendication précédente, dans lequel l'épaisseur des noeuds (13) est sensiblement identique à l'épaisseur des panneaux (9).

3. Elément tubulaire expansible (3, 37) selon l'une quelconque des revendications précédentes, dans lequel au moins une des liaisons (11) présente une constitution identique à au moins une partie des panneaux (9) adjacents à ladite liaison (11) et, au moins par endroits, une épaisseur moindre que les épaisseurs de ces panneaux (9).

4. Elément tubulaire expansible (3, 37) selon l'une quelconque des revendications précédentes, dans lequel la paroi périphérique (7) est composée d'un matériau composite ou multicouche, lequel comporte de préférence un matériau polymère et/ou élastomère, plus préférentiellement du polypropylène et du polyéthylène.

5. Elément tubulaire expansible (3, 37) selon la revendication précédente, dans lequel la paroi périphérique (7) est composée d'un matériau multicouche et comporte une couche électriquement conductrice (23), de préférence métallique, plus préférentiellement sous forme d'une encre conductrice et/ou d'un film métallique disposés sur la surface intérieure et/ou extérieure de la paroi périphérique (7).

6. Elément tubulaire expansible (3, 37) selon l'une quelconque des revendications 1 à 3, dans lequel au moins une des liaisons (11) est formée par un film adhésif reliant deux panneaux (9) adjacents.

7. Vérin gonflable (1, 35, 39) par un fluide, comprenant un élément tubulaire expansible (3, 37) selon l'une quelconque des revendications précédentes et un embout (5, 41) fixé à une des extrémités de l'élément tubulaire expansible (3, 37).

8. Vérin gonflable (1, 35, 39) selon la revendication précédente, dans lequel l'embout (5, 41) comporte un moyen d'alimentation et/ou d'évacuation de fluide (19), l'élément tubulaire expansible (3, 37) étant configuré pour passer d'un mode rétracté dans lequel il présente un premier volume intérieur à un mode dilaté dans lequel il présente un second volume intérieur et une forme sensiblement cylindrique, le second volume intérieur étant supérieur au premier volume intérieur, de préférence d'au moins un facteur 10, plus préférentiellement d'au moins un facteur 100.

9. Vérin gonflable (1, 35, 39) selon la revendication 7 ou 8, dans lequel la paroi périphérique (7) est collée sur l'embout (5, 41), ou dans lequel l'embout (5, 41) comporte un flasque (15, 43) et un élément de fixation (17), la paroi périphérique (7) étant maintenue dans l'embout (5, 41) par serrage entre le flasque (15, 43) et l'élément de fixation (17).

10. Procédé de fabrication d'un élément tubulaire expansible selon l'une quelconque des revendications 1 à 6, lequel comporte les étapes suivantes :
- fabrication d'un tube majoritairement composé de matériau plastique,
- réalisation d'une pluralité de motifs sur le tube par des moyens de gravage et/ou de marquage,
- déformation des motifs, de manière à ce que les motifs à l'état déformé forment les liaisons, l'étape de déformation des motifs étant réalisée par dépressurisation de l'intérieur du tube, de préférence à une pression comprise entre 0 et 0,9 bar, et/ou par appui mécanique simultané sur les motifs disposés sur une même section transversale du tube.

## Patentansprüche

1. Expandierbares rohrförmiges Element (3, 37) für einen durch ein Fluid aufblasbaren Zylinder, mit einer Umfangswand (7), die flüssigkeitsdicht ist und aus einer Vielzahl von Platten (9) gebildet ist, die paarweise durch im Wesentlichen geradlinige Verbindungen (11) verbunden sind, die jeweils eine Schwenkachse materialisieren, wobei
die Verbindungen (11) überwiegend aus Kunststoffmaterial zusammengesetzt sind,
wobei die Platten (9) steifer sind als die Verbindungen (11), so dass zwei Platten (9), die an eine Verbindung (11) angrenzen, eine Drehung um die durch diese Verbindung (11) materialisierte Schwenkachse ausführen können,
wobei jedes Ende einer Verbindung (11) mit mindestens zwei Enden anderer Verbindungen (11) verbunden ist, um einen Knoten (13) zu definieren,
**dadurch gekennzeichnet, dass** jeder Knoten (13) eine Dicke aufweist, die größer als die minimale Dicke der benachbarten Verbindungen (11) ist.

2. Expandierbares rohrförmiges Element (3, 37) nach dem vorhergehenden Anspruch, bei dem die Dicke der Knoten (13) im Wesentlichen gleich der Dicke der Platten (9) ist.

3. Expandierbares rohrförmiges Element (3, 37) nach einem der vorhergehenden Ansprüche, bei dem mindestens eine der Verbindungen (11) einen Aufbau aufweist, der mit mindestens einem Teil der an die Verbindung (11) angrenzenden Platten (9) identisch ist, und zumindest stellenweise eine geringere Dicke als die Dicken dieser Platten (9) aufweist.

4. Expandierbares rohrförmiges Element (3, 37) nach einem der vorhergehenden Ansprüche, wobei die Umfangswand (7) aus einem Verbund- oder Mehrschichtmaterial besteht, das vorzugsweise ein polymeres und/oder elastomeres Material, besonders bevorzugt Polypropylen und Polyethylen, umfasst.

5. Expandierbares rohrförmiges Element (3, 37) nach dem vorhergehenden Anspruch, wobei die Umfangswand (7) aus einem mehrschichtigen Material besteht und eine elektrisch leitfähige Schicht (23) aufweist, vorzugsweise aus Metall, besonders bevorzugt in Form einer leitfähigen Tinte und/oder eines Metallfilms, die auf der inneren und/oder äußeren Oberfläche der Umfangswand (7) angeordnet sind.

6. Expandierbares rohrförmiges Element (3, 37) nach einem der Ansprüche 1 bis 3, wobei mindestens eine der Verbindungen (11) durch einen Klebefilm gebildet wird, der zwei benachbarte Platten (9) miteinander verbindet.

7. Durch ein Fluid aufblasbarer Zylinder (1, 35, 39), umfassend ein expandierbares rohrförmiges Element (3, 37) nach einem der vorhergehenden Ansprüche und ein Endstück (5, 41), das an einem Ende des expandierbaren rohrförmigen Elements (3, 37) befestigt ist.

8. Aufblasbarer Zylinder (1, 35, 39) nach dem vorhergehenden Anspruch, wobei das Mundstück (5, 41) ein Mittel (19) zum Zuführen und/oder Ablassen von Fluid aufweist, wobei das expandierbare rohrförmige Element (3, 37) so konfiguriert ist, dass es von einem eingezogenen Modus, in dem es ein erstes Innenvolumen aufweist, in einen expandierten Modus übergeht, in dem es ein zweites Innenvolumen und eine im Wesentlichen zylindrische Form aufweist, wobei das zweite Innenvolumen größer als das erste Innenvolumen ist, vorzugsweise um mindestens einen Faktor 10, noch bevorzugter um mindestens einen Faktor 100.

9. Aufblasbarer Zylinder (1, 35, 39) nach Anspruch 7 oder 8, bei dem die Umfangswand (7) auf das Endstück (5, 41) geklebt ist, oder bei dem das Endstück (5, 41) einen Flansch (15, 43) und ein Befestigungselement (17) aufweist, wobei die Umfangswand (7) durch Einklemmen zwischen dem Flansch (15, 43) und dem Befestigungselement (17) in dem Endstück (5, 41) gehalten wird.

10. Verfahren zur Herstellung eines expandierbaren Rohrelements nach einem der Ansprüche 1 bis 6, das die folgenden Schritte umfasst: - Herstellen eines Rohres, das überwiegend aus Kunststoffmaterial besteht,
- Herstellen einer Vielzahl von Mustern auf dem Rohr durch Gravur- und/oder Markierungsmittel,
- Verformen der Muster, so dass die Muster im verformten Zustand die Verbindungen bilden, wobei der Schritt des Verformens der Muster durch Druckentlastung des Rohrinneren, vorzugsweise bei einem Druck zwischen 0 und 0,9 bar, und/oder durch gleichzeitiges mechanisches Drücken auf die Muster, die auf einem gleichen Querschnitt des Rohres angeordnet sind,
durchgeführt wird.

## Claims

1. Expandable tubular element (3, 37) for a fluid-inflatable cylinder, comprising a peripheral wall (7) that is fluid-tight and formed by a plurality of panels (9) connected in pairs by substantially rectilinear links (11) each representing a pivot axis,
the links (11) being made mainly of plastic material,
the panels (9) being more rigid than the links (11), so that two panels (9) adjacent to a link (11) can rotate about the pivot axis represented by this link (11),
each end of a link (11) being connected to at least two ends of other links (11) so as to define a node (13),
**characterised in that** each node (13) have a thickness greater than the minimum thickness of the adjacent links (11).

2. Expandable tubular element (3, 37) according to the preceding claim, wherein the nodes (13) have substantially the same thickness as the panels (9).

3. Expandable tubular element (3, 37) according to any one of the preceding claims, wherein at least one of the links (11) has a composition that is the same as at least some of the panels (9) adjacent to said link (11) and, at least in places, a thickness that is less than that of these panels (9).

4. Expandable tubular element (3, 37) according to any one of the preceding claims, wherein the peripheral wall (7) is composed of a composite or multilayer material, which preferably comprises a polymer and/or elastomer material, more preferably polypropylene and/or polyethylene.

5. Expandable tubular element (3, 37) according to the preceding claim, wherein the peripheral wall (7) is composed of a multilayer material and comprises an electrically conductive layer (23), preferably metallic, more preferably consisting of a conductive ink and/or a metallic film arranged on the inner and/or outer surface of the peripheral wall (7).

6. Expandable tubular element (3, 37) according to any one of claims 1 to 3, wherein at least one of the links (11) is formed by an adhesive film connecting two adjacent panels (9).

7. Fluid-inflatable cylinder (1, 35, 39) comprising an expandable tubular element (3, 37) according to any one of the preceding claims and an end piece (5, 41) attached to one end of the expandable tubular element (3, 37).

8. Inflatable cylinder (1, 35, 39) according to the preceding claim, wherein the end piece (5, 41) comprises a means (19) for supplying and/or evacuating fluid, the expandable tubular element (3, 37) being configured to switch from a retracted mode in which it has a first inner volume to an expanded mode in which it has a second inner volume and a substantially cylindrical shape, the second inner volume being greater than the first inner volume, preferably by at least a factor of 10, more preferably by at least a factor of 100.

9. Inflatable cylinder (1, 35, 39) according to claim 7 or 8, wherein the peripheral wall (7) is bonded to the end piece (5, 41), or wherein the end piece (5, 41) comprises a flange (15, 43) and an attachment element (17), the peripheral wall (7) being held in the end piece (5, 41) by clamping between the flange (15, 43) and the attachment element (17).

10. Method for manufacturing an expandable tubular element according to any one claims 1 to 6, comprising the following steps:
- manufacturing a tube made mainly of plastic material,
- producing a plurality of patterns on the tube by engraving and/or marking means,
- deforming the patterns, so that the patterns in the deformed state form the links, the step of deforming the patterns being carried out by reducing the pressure inside the tube, preferably to a pressure of between 0 and 0.9 bar, and/or by simultaneously mechanically pressing on the patterns arranged on a given cross-section of the tube.
